# EUROPEAN PATENT APPLICATION

(11) **EP 2 578 421 A1**
(43) Date of publication of application: **10.04.2013**
(21) Application number: 11786549.3
(22) Date of filing: 19.05.2011
(51) Int. Cl.: B60G 15/06, B60G 11/16, F16F 1/32, F16F 9/32

(54) **SUSPENSION DEVICE**

(30) Priority: 25.05.2010 JP 2010119659
(71) Applicant: Nhk Spring Co., Ltd., Kanazawa-ku Yokohama-shi Kanagawa 236-0004 (JP)
(72) Inventor: ITO, Hidemasa, Yokohama-shi Kanagawa 236-0004 (JP); TOMINAGA, Jun, Yokohama-shi Kanagawa 236-0004 (JP); TAJIMA, Norihiro, Yokohama-shi Kanagawa 236-0004 (JP)
(74) Representative: Eisenführ, Speiser & Partner
(86) International application number: PCT/JP2011/061512
(87) International publication number: WO 2011/148850

(57) **Abstract**

A suspension device for solving problems that occur in a conventional damper and a rubber member is provided. A suspension device 101 is equipped with, for example, a damper 50 including a piston portion 51, a suspension spring 60, an upper seat 70, and a spring 1. The spring 1 is arranged between an upper end portion of the piston portion 51 and a lower surface of the upper seat 70 and is an elastic member for receiving a load from the damper 50. The spring 1 has load characteristics in which hysteresis does not occur, whereby a dynamic spring constant can be small. Therefore, transmission of vibrations in a high-frequency range and an infinitesimal amplitude range is decreased. On the other hand, the spring 1 has a main body 10 that functions as a disc spring portion. Therefore, the spring constant in a direction perpendicular to an axis line of the damper 50 is large, whereby stiffness in the direction perpendicular to the axis line is increased. As a result, ride quality is improved, and stable handling is obtained.

## Description

### Technical Field

The present invention relates to a suspension device including an upper seat and a damper that is made so as to be mounted to a vehicle body via the upper seat. In particular, the present invention relates to an improvement of an elastic member that may be provided between the damper and the vehicle body.

### Background Art

Vehicles such as automobiles are provided with suspension devices that control transmission of shocks to the vehicle body when wheels of the vehicles receive the shocks from road surfaces. The suspension device is equipped with a damper and a suspension spring. The damper has a piston portion and a cylinder portion. The piston portion is made so as to be connected to a vehicle body side, and the cylinder portion is made so as to be connected to a wheel side and slidably guides the piston portion. The piston portion of the damper and an end portion of the suspension spring on the vehicle body side are connected to the vehicle body side via an upper seat. The cylinder portion is connected to the wheel side via a suspension arm or the like.

In the suspension device, in order to prevent transmission of vibrations through the damper to the vehicle body, an upper support having a rubber member as an elastic member is used as the upper seat. The upper support is provided with plural tubular members, and the rubber members are formed between the tubular members. For the upper support, there are two types of upper supports. One is an upper support for applying loads separately (for example, Japanese Unexamined Patent Application Laid-open No. 5-172171). The other is an upper support for applying loads integrally (for example, Japanese Unexamined Patent Applications Laid-open Nos. 2002-54685 and 2009-196574).

In the upper support for applying loads separately, a load from the damper is applied through a shock-absorbing rubber member on the vehicle body, and a load from the suspension spring is applied through a supporting rubber member on the vehicle body. The shock-absorbing rubber member and the supporting rubber member are separate members, and the loads are separately applied from the wheel on the vehicle body. In the upper support for applying loads integrally, the shock-absorbing rubber member and the supporting rubber member are integrally formed. Therefore, the load from the damper and the load from the suspension are applied through the integrated rubber member on the vehicle body, and the loads are not separately applied from the wheel on the vehicle body.

Such a damper and rubber members of the suspension device have the following problems.

In the damper, the piston portion has a rod at an upper end portion thereof, and an upper end portion of the rod is connected to the vehicle body side, and a lower end portion of the rod is fixed to the piston portion. The piston portion has a valve at a lower end portion thereof. The valve of the piston portion slides on an inner surface of the cylinder portion. A rod guide portion with a sealing portion is provided around the rod, and the rod slides on the sealing portion. Hydraulic oil is enclosed in the cylinder portion of the damper, and gas is also enclosed therein as necessary. Therefore, when the hydraulic oil passes the valve in sliding and generates resistance, damping function is performed.

However, the damping function is not performed with respect to vibrations in a high-frequency range or an infinitesimal amplitude range because the damper cannot follow the vibrations. For example, when stick-slip vibrations occur between the sealing portion of the rod guide portion and the rod, the damper does not move smoothly. As a result, it is not comfortable in the vehicle. In this regard, in order to prevent the stick-slip vibrations, composition of base oil of the hydraulic oil is optimized (for example, Japanese Unexamined Patent Application Laid-open No. 2008-163165).

Vibrations from the rod of the piston portion in a vertical direction of the vehicle body function as shear stress with respect to the rubber member of the upper seat. Therefore, in order to improve ride quality and obtain stable handling, the rubber member is required to have the following spring characteristics. That is, the rubber member should be soft in the vertical direction of the vehicle body (axial direction of the damper) and should not greatly deflect in a horizontal direction of the vehicle body (direction perpendicular to the axis line of the damper).

In the structure in which the rubber member is arranged between the members, there is a limitation to increasing a ratio of a spring constant in the direction perpendicular to the axis line to a spring constant in the axial direction. Therefore, the spring constant in the direction perpendicular to the axis line is at most approximately two to three times greater than that in the axial direction. In view of this, a technique is proposed so as to increase the ratio of the spring constant in the direction perpendicular to the axis line to the spring constant in the axial direction (for example, Japanese Examined Utility Model Application Publication No. 5-11046). In this technique, another member such as an inner sleeve is buried in the rubber member, whereby the spring constant in the direction perpendicular to the axis line is five times greater than that in the axial direction.

As described above, in the damper, the hydraulic oil is improved so as to prevent the stick-slip vibrations in the high-frequency range and the infinitesimal amplitude range in order to improve the ride quality. However, this technique is effective for preventing stick-slip vibrations in only limited ranges in the high-frequency range and the infinitesimal amplitude range. On the other hand, in the rubber member, there is a limitation to increasing the ratio of the spring constants. Moreover, in this case, another member is required so as to increase the ratio of the spring constants, whereby the number of parts is increased, and the structure of the rubber member is complicated.

### Disclosure of the Invention

Accordingly, an object of the present invention is to provide a suspension device for solving the above-described problems that occur in the conventional damper and the rubber member.

According to a first aspect of the present invention, the present invention provides a suspension device including a damper and an upper seat to which the damper is connected. The damper is made so as to be connected to a vehicle body via the upper seat. The suspension device includes a spring that is made so as to be provided at at least one of a portion between the vehicle body and the upper seat and a portion between the damper and the upper seat. The spring has a main body with a hole, tubular portions, and corner portions. The main body has an inner circumferential portion and an outer circumferential portion and extends in a direction crossing an axial direction of the damper. The tubular portions are provided at the inner circumferential portion and the outer circumferential portion of the main body, respectively. Each tubular portion has an abutting portion that is made so as to protrude from the inner circumferential portion or the outer circumferential portion of the main body toward a mating member for abutting thereon. Each corner portion is formed at a boundary portion between the main body and the tubular portion and is elastically deformable so that angle of the corner portion varies with pressure that is applied from the mating member. In this case, when the spring is provided between the vehicle body and the upper seat, the mating member is the vehicle body or the upper seat. When the spring is provided between the damper and the upper seat, the mating member is the damper or the upper seat.

In the suspension device of the first aspect of the present invention, the spring is made so as to be provided at at least one of a portion between the vehicle body and the upper seat and a portion between the damper and the upper seat. When a load from a wheel of a vehicle is applied through the damper on the vehicle body, the load may include vibrations in the high-frequency range or the infinitesimal amplitude range. In this case, even when the damper cannot follow such vibrations, the spring that is arranged as described above has the following functions and thereby decreases fluctuation of the load.

In the spring, since the main body extends in the direction crossing the axial direction of the damper, the main body functions as a disc spring portion. Therefore, loading characteristics of the spring are non-linear so as to have an approximately flat region as in the characteristics of a disc spring. Accordingly, the spring can support a large load in a small space. When the corner portion is applied with a load and elastically deforms, the corner portion shifts to the outside of the end portion of the main body while it varies the angle thereof. Therefore, by appropriately setting the length of the tubular portion between the corner portion and the mating member, a portion of the tubular portion adjacent to the mating member is prevented from deforming when a load is applied. Accordingly, sliding of the tubular portion with respect to the mating member is prevented. As a result, unlike in the case of a disc spring, friction does not occur between the tubular portion and the mating member, whereby hysteresis does not occur in the loading characteristics of the spring. Thus, a dynamic spring constant of the spring can be decreased. Therefore, even when the stick-slip vibrations occur in the damper, the spring having a small spring constant in the axial direction functions as described above. The spring decreases the fluctuation of the load even when it absorbs vibrations in the high-frequency range or the infinitesimal amplitude range, whereby the ride quality is improved. Thus, it is not necessary to prevent the occurrence of the stick-slip vibrations, and composition of a base oil of hydraulic oil in the damper need not be optimized.

On the other hand, since the main body of the spring functions as a disc spring portion as described above, the spring constant in the direction orthogonally crossing the axial direction of the damper (hereinafter called a "direction perpendicular to the axis line") is large. Therefore, the ratio of the spring constant in the direction perpendicular to the axis line to the spring constant in the axial direction is increased, whereby stiffness in the direction perpendicular to the axis line is increased. Even when the vibrations in the axial direction of the damper are applied on the spring as shear stress, since the spring does not greatly deflect in the direction perpendicular to the axis line, stable handling is obtained. Accordingly, unlike in the case of using a conventional rubber member, another member for improving the ratio of the spring constants is not necessary, whereby the number of parts is decreased. Moreover, this effect is obtained by using the simple structure in which the tubular portions are provided at the main body that functions as a disc spring portion.

The suspension device of the first aspect of the present invention may have various structures. For example, the suspension device may be equipped with a fixing means for fixing the damper to the upper seat, and another spring having the same structure as the spring may be provided between the fixing means and the upper seat. In this structure, the other spring receives a load that is applied from the damper through the fixing means and decreases fluctuation of the load. In addition, when a vehicle body moves in the opposite direction of a wheel, the other spring absorbs the impact On the other hand, the spring may be set so that the spring constant is smallest in an initial condition and is large when it works and has a great change in the amount of deflection. In this structure, while the suspension device works, characteristics of the spring in a region with a small dynamic spring constant is utilized during ordinary infinitesimal amplitude vibrations, and the damper is effectively used by increasing the spring constant when large amplitude vibrations occur. Therefore, the fluctuation of the load is effectively decreased.

According to a second aspect of the present invention, the present invention provides a suspension device including a damper and an upper seat to which the damper is connected. The damper is made so as to be connected to a vehicle body via the upper seat. The upper seat has a main body with a hole, a tubular portion, and a corner portion. The main body has an inner circumferential portion and an outer circumferential portion and extends in a direction crossing an axial direction of the damper. The tubular portion is provided at at least the inner circumferential portion of the inner circumferential portion and the outer circumferential portion of the main body. The tubular portion has an abutting portion and a mounting portion. The abutting portion is made so as to protrude from the circumferential portion of the main body toward a mating member for abutting thereon. The mounting portion is formed at the abutting portion so as to protrude toward an inside or outside of the hole in a radial direction and is made so as to be mounted to the mating member. The corner portion is formed at a boundary portion between the main body and the tubular portion and is elastically deformable so that angle of the corner portion varies with pressure that is applied from the mating member. In this case, the mating member is the damper or the vehicle body. The circumferential portion is the inner circumferential portion or the outer circumferential portion of the main body, to which the tubular portion is provided.

In the suspension device of the second aspect of the present invention, the upper seat has a similar shape as that of the spring in the suspension device of the first aspect of the present invention, and it is mounted to the mating member with the mounting portion. Therefore, similar effects to those of the suspension device of the first aspect of the present invention are obtained. Moreover, the number of parts is decreased, and this suspension device is easily mounted in a small space.

### Effects of the Invention

According to the suspension devices of the present invention, the ride quality is improved and handling is stable. Such effects can be obtained without optimizing composition of a base oil of hydraulic oil in a damper and without using another member for improving the ratio of the spring constants.

### Brief Description of the Drawings

Fig. 1 is a sectional side view that shows an approximate structure of a part of a suspension device relating to a first embodiment of the present invention.
Fig. 2 is a sectional side view that shows an approximate structure of a part of a modification of a suspension device relating to a first embodiment of the present invention.
Figs. 3A and 3B show a structure of a spring that is used in a suspension device relating to an embodiment of the present invention. Fig. 3A is a perspective view, and Fig. 3B is a sectional side view of the spring that is arranged between members.
Figs. 4A and 4B show movement of a right side portion of the spring shown in Figs. 3A and 3B. Fig. 4A is a sectional side view of the spring before it works (shown by a dotted line) and the spring during working (shown by a solid line). Fig. 4B is an enlarged sectional side view of a first corner portion and a second corner portion of the spring during working.
Fig. 5 is a graph that shows some results of an experiment of loading characteristics of a practical example of a spring that is used in a suspension device relating to a first embodiment of the present invention.
Fig. 6 is a view for describing a method of setting an initial load of a spring in a suspension device relating to a first embodiment of the present invention.
Fig. 7 is a graph that shows a relationship between a frequency of vibration and a load fluctuation range of a comparative example and a practical example of a suspension device relating to a first embodiment of the present invention.
Fig. 8 is a sectional side view that shows an approximate structure of a part of another modification of a suspension device relating to a first embodiment of the present invention.
Figs. 9A and 9B show an approximate structure of a suspension device relating to a second embodiment of the present invention. Fig. 9A is a sectional side view of a part of the suspension device, and Fig. 9B is a sectional side view of an upper seat that is used in the suspension device.

### Explanation of Reference Numerals

1 denotes a spring, 10 and 90 denote a main body, 10A and 90A denote a hole, 11 and 91 denote a first tubular portion (tubular portion), 12 and 92 denote a second tubular portion (tubular portion), 13 and 93 denote a first corner portion (corner portion), 14 and 94 denote a second corner portion (corner portion), 50 denotes a damper, 70 and 70A denote an upper seat, 95 and 96 denote a mounting portion, 101, 101A, 101B, and 102 denote a suspension device, 111: denotes a first member, and 112 denotes a second member.

### Best Mode for Carrying Out the Invention

### (1) First Embodiment

### (1-1) General Structure

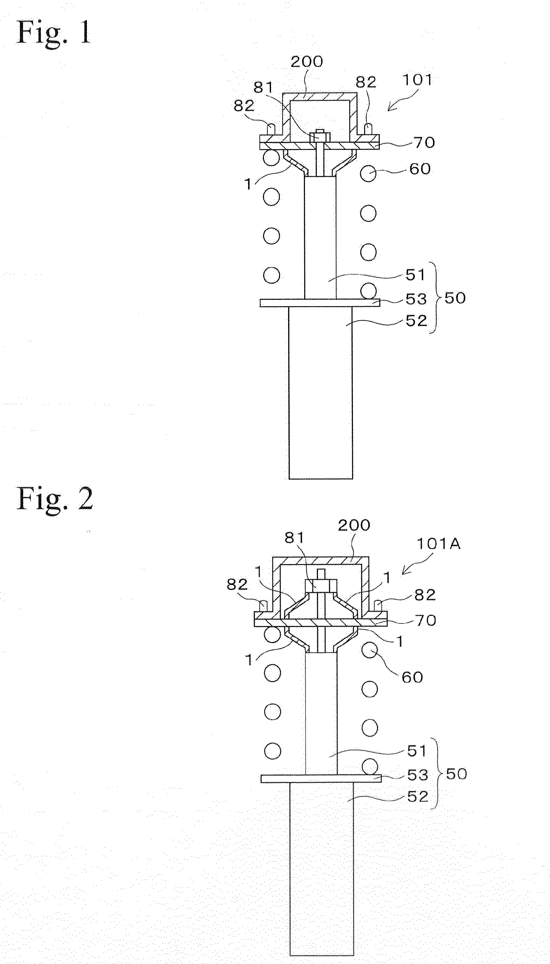

An embodiment of the present invention will be described with reference to the figures hereinafter. Fig. 1 is a sectional side view that shows an approximate structure of a suspension device 101 relating to the first embodiment of the present invention. Fig. 2 is a sectional side view that shows a suspension device 101A relating to a modification of the first embodiment of the present invention.

The suspension device 101 is equipped with, for example, a damper 50, a suspension spring 60, an upper seat 70, and a spring 1. The damper 50 is equipped with a piston portion 51 and a cylinder portion 52. The piston portion 51 has a valve at a lower end portion thereof and a rod. The valve of the piston portion 51 slides on an inner surface of the cylinder portion 52. The rod of the piston portion 51 slides on a sealing portion of a rod guide portion (not shown in the figures) that is provided around the rod. The rod of the piston portion 51 has an upper end portion that is fixed to the upper seat 70 with a fixing member 81 such as a screw or the like. The cylinder portion 52 is formed with a flange portion 53 at an outer circumferential portion thereof, and the flange portion 53 supports an end portion of the suspension spring 60 on a wheel side. Hydraulic oil or the like is enclosed in the cylinder portion 52, whereby damping function is performed when the hydraulic oil or the like passes the valve in sliding and generates resistance.

The suspension spring 60 is provided between the flange portion 53 of the cylinder portion 52 and the upper seat 70 and is, for example, a coil spring. The suspension spring 60 receives a load from a wheel in conjunction with the damper 50. The upper seat 70 is fixed to a vehicle body 200 with a fixing member 82 such as a screw or the like. The piston portion 51 of the damper 50 and an end portion of the suspension spring 60 on a vehicle body side are connected to the vehicle body 200 via the upper seat 70. The cylinder portion 52 is connected to the wheel (not shown in the figures) via a suspension arm (not shown in the figures) or the like.

The spring 1 is arranged between the upper end portion of the piston portion 51 and a lower surface of the upper seat 70 and is an elastic member for receiving a load from the damper 50. In the case of the suspension device 101A shown in Fig. 2, as an elastic member for receiving a load from the damper 50, a spring 1 (another spring) is further provided between a larger diameter portion of the fixing member 81 and an upper surface of the upper seat 70.

### (1-2) Structure of Spring

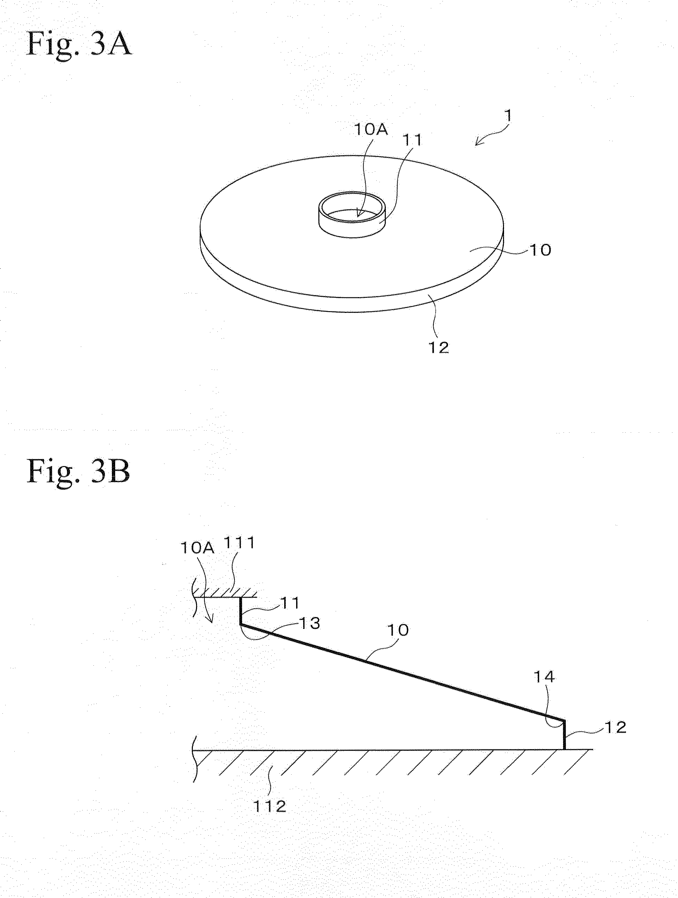

Figs. 3A and 3B show the structure of the spring 1. Fig. 3A is a perspective view of the spring 1, and Fig. 3B is a sectional side view of a right-hand portion of the spring 1 that is arranged between a first member 111 and a second member 112. It should be noted that in the case of arranging the spring 1 between the upper end portion of the piston portion 51 and the lower surface of the upper seat 70, the piston portion 51 corresponds to the first member 111, and the upper seat 70 corresponds to the second member 112. On the other hand, in the case of arranging the spring 1 between the larger diameter portion of the fixing member 81 and the upper surface of the upper seat 70, the larger diameter portion of the fixing member 81 corresponds to the first members 111, and the upper seat 70 corresponds to the second member 112.

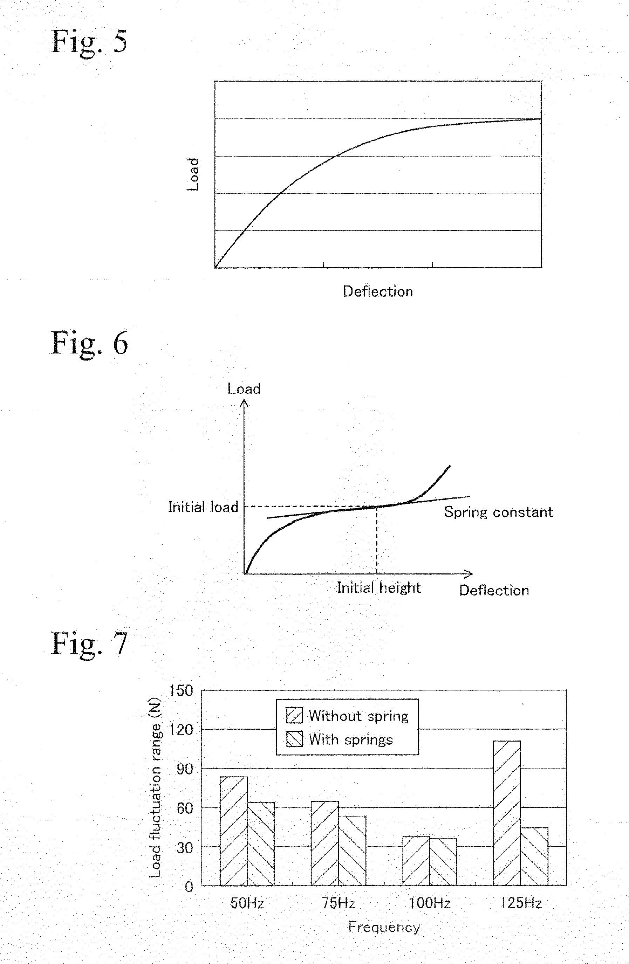

The spring 1 is made of, for example, spring steel or a reinforced plastic material. The spring 1 is provided with a main body 10 that is formed with a hole 10A at a center portion thereof, for example. The main body 10 extends in a direction crossing directions of pressures from the first member 111 and the second member 112, for example. The spring 1 is a disc spring portion having a function as a disc spring. The main body 10 has an approximately conical shape that is downwardly sloped, for example. Therefore, the spring 1 has non-linear loading characteristics so as to have an approximately flat region as shown in Fig. 6. Since the main body 10 functions as a disc spring portion, the spring constant in a direction orthogonally crossing the axial direction (hereinafter called a "direction perpendicular to the axis line") is large.

The hole 10A has a circular shape, for example. The main body 10 is provided with a first tubular portion 11 (tubular portion) at an inner circumferential portion thereof. The first tubular portion 11 (tubular portion) protrudes toward the first member 111 and has an abutting portion at an upper end portion for abutting on the first member 111. The main body 10 is provided with a second tubular portion 12 (tubular portion) at an outer circumferential portion thereof. The second tubular portion 12 (tubular portion) protrudes toward the second member 112 and has an abutting portion at a lower end portion for abutting on the first member 112. The tubular portions 11 and 12 are cylinder portions, for example.

A first corner portion 13 is formed at a boundary portion between the main body 10 and the first tubular portion 11, and a second corner portion 14 is formed at a boundary portion between the main body 10 and the second tubular portion 12. The first corner portion 13 and the second corner portion 14 are elastically deformable such that angles thereof vary with pressures from the first member 111 and the second member 112, respectively. The functions of the tubular portions 11 and 12 will be described in detail later.

The spring 1 may be formed by bending each portion in press forming. Alternatively, the spring 1 may be formed by welding each portion.

### (1-3) Functions of Tabular Portions of Spring

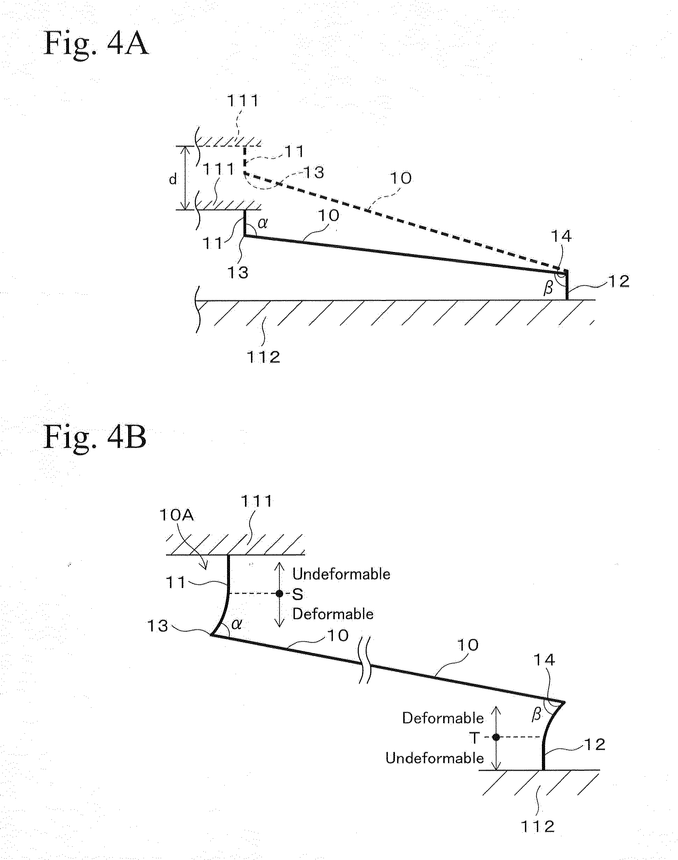

Functions of the tubular portions 11 and 12 when a load is applied will be described with reference mainly to Figs. 4A and 4B. Figs. 4A and 4B show movement of a spring 1 that is arranged between the first member 111 and the second member 112. Fig. 4A is a cross section of the spring 1 before it works (shown by a dotted line) and the spring 1 during working (shown by a solid line). Fig. 4B is an enlarged cross section of the first corner portion 13 and the second corner portion 14 of the spring 1 during working. Figs. 4A and 4B show only the right-hand portion of the spring 1 as in the case of Fig. 3B.

A load may be downwardly applied from the first member 111 on the spring 1 that is arranged between the first member 111 and the second member 112 as shown by the dotted line in Fig. 4A. Then, as shown by the solid line in Fig. 4B, the spring 1 deflects, and the first member 111 moves downwardly. The symbol "d" shown in Fig. 4A represents an amount of the deflection of the spring 1:

The main body 10 extends in the direction crossing the direction of the pressure from the first member 111, and the first tubular portion 11 protrudes from the inner circumferential portion of the main body 10 at the upper side of the spring 1 toward the first member 111 and abuts on the first member 111. The first corner portion 13 that is formed at the boundary portion between such main body 10 and the first tubular portion 12 is elastically deformable such that the angle a varies with the pressure from the first member 111 when the load is applied. The first corner portion 13 is a portion that is formed at the boundary portion between the main body 10 and the first tubular portion 11, which have the positional relationship as described above. Therefore, such first corner portion 13 shifts to the inside of the inner circumferential portion of the main body 10 (left side in Fig. 4B) while the angle a varies, when the load is applied.

Thus, the first corner portion 13 elastically deforms when the load is applied. Therefore, by appropriately setting the length of the first tubular portion 11, deformation of a portion on the first member 111 side of the first tubular portion 11 is prevented. That is, the length of the first tubular portion 11 is set so that the first tubular portion 11 has an undeformable portion on the first member 111 side (a portion above a point S shown in Fig. 4B) when a load is applied.

On the other hand, the second tubular portion 11 protrudes from the inner circumferential portion of the main body 10 at the lower side of the spring 1 toward the second member 112 and abuts on the second member 112. The second corner portion 14 has the same function as that of the first corner portion 13. Therefore, the second corner portion 14 shifts to the outside of the outer circumferential portion of the main body 10 (right side in Fig. 4B) while the angle β varies with a pressure from the second member 112, when it elastically deforms by the applied load.

Thus, the second corner portion 14 elastically deforms when the load is applied. Therefore, by appropriately setting the length of the second tubular portion 12, deformation of a portion on the second member 112 side of the second tubular portion 12 is prevented. That is, the length of the second tubular portion 12 is set so that the second tubular portion 12 has an undeformable portion on the second member 112 side (a portion under a point T in Fig. 4B) when a load is applied.

Since the spring 1 has undeformable portions at the tubular portions 11 and 12 as described above, sliding of the spring 1 with respect to the mating members is prevented. As a result, as shown in Fig. 5, the spring 1 has loading characteristics in which hysteresis that causes problems in a disc spring does not occur. Fig. 5 is a graph that shows some results of an experiment of loading characteristics of a practical example of the spring 1. The spring 1 is preferably arranged in the suspension device 101 or 101A so that the spring constant is smallest in an initial condition and becomes large when it works and has a change in the amount of deflection.

### (1-4) Movement of First Embodiment

Movement of the suspension device 101 will be described with reference to the figures. When the suspension device 101 or 101A is provided to a wheel of a vehicle, and the wheel receives a shock from a road surface, a load is applied on the suspension device 101. In this case, the load is applied on the vehicle body 200 through the damper 50 and the suspension spring 60.

When the load includes vibrations in a high-frequency range or a infinitesimal amplitude range, there may be cases in which the damper 50 cannot follow such vibrations. In the suspension device 101 shown in Fig. 1, the spring 1 is arranged between the upper end portion of the piston portion 51 and the lower surface of the upper seat 70 as shown in Fig. 1. In the suspension device 101A shown in Fig. 2, another spring 1 is also arranged between the larger diameter portion of the fixing member 81 and the upper surface of the upper seat 70. In the spring 1, friction does not occur between the tubular portion 11 and the mating member 111 and between the tubular portion 12 and the mating member 112 as described above. Therefore, the spring 1 has loading characteristics in which hysteresis does not occur. Accordingly, the dynamic spring constant can be small, whereby fluctuation of the load is decreased when the vibrations in the high-frequency range or the infinitesimal amplitude range occur.

Fig. 7 is a graph that shows a result of an experiment to determine the relationship between frequency of vibration and load fluctuation range of a comparative example and a practical example of a suspension device relating to the first embodiment of the present invention. As the practical example, a specific example of the suspension device 101A having the springs 1 shown in Fig. 2 was used. As the comparative example, a specific example having the same structure as that of the practical example was used except that the springs 1 were not used. In the experiment of the specific example of the spring 1, a sheet thickness was 0.4 mm, a height of the main body was 3.17 mm, an inner diameter of the main body (diameter of the opening of the first tubular portion) was 13 mm, an outer diameter of the main body (diameter of the opening of the second tubular portion) was 47 mm, and a height of the second tubular portion was 5.2 mm. In the experiment, the suspension devices of the practical example and the comparative example were subjected to vibrations with a frequency of 50 Hz, 75 Hz, 100 Hz, or 125 Hz, and load fluctuation range (N) at each frequency was measured. The results are shown in Fig. 7. As shown in Fig. 7, in the suspension device of the practical example with the springs, the load fluctuation range was decreased in each frequency compared with the suspension device of the comparative example without the springs.

According to the embodiment of the present invention, even when stick-slip vibrations occur at the damper 50, the spring 1 having a small spring constant in the axial direction decreases the fluctuation of the load, whereby the ride quality is improved. Thus, it is not necessary to prevent the occurrence of the stick-slip vibrations, whereby optimization of composition of a base oil of hydraulic oil in the damper is not required.

On the other hand, in the spring 1, since the main body functions as a disc spring portion as described above, the spring constant in the direction perpendicular to the axis line of the damper 50 is large. Therefore, the ratio of the spring constant in the direction perpendicular to the axis line to the spring constant in the axial direction is increased. For example, the spring constant in the direction perpendicular to the axis line may be set to be not more than 200 N/mm, and the spring constant in the axial direction may be set to be not less than 2000 N/mm. That is, the spring constant in the direction perpendicular to the axis line may be set to be not less than 10 times greater than the spring constant in the axial direction. Therefore, the spring 1 has high stiffness in the direction perpendicular to the axis line and thereby does not greatly deflect in the direction perpendicular to the axis line even when vibrations in the axial direction of the damper 50 are applied on the spring 1 as shear stress. As a result, stable handling is obtained. Accordingly, unlike in the case of using a general rubber member, another member for increasing the ratio of the spring constants is not necessary, whereby the number of parts is decreased. Moreover, this effect is obtained by the simple structure in which the tubular portion 11 and 12 are provided to the main body 10 that functions as a disc spring portion.

In particular, in the case of also arranging another spring 1 between the larger diameter portion of the fixing member 81 and the upper surface of the upper seat 70, the other spring receives a load that is applied from the damper 50 through the fixing member 81 and decreases fluctuation of the load. In addition, the other spring 1 absorbs impacts when the vehicle body 200 moves to a side opposite to the wheel. As shown in Fig. 6, an initial load may be set as follows when the spring 1 is arranged. That is, the initial load may be set so that the spring constant is smallest in an initial condition and becomes large when the spring works and has a great change in the amount of deflection, as shown in Fig. 6. In this case, while the suspension device 101 works, characteristics of the spring in a region with a small dynamic spring constant is utilized during ordinary infinitesimal amplitude vibrations, and the damper is effectively used by increasing the spring constant when large amplitude vibrations occur. Therefore, the fluctuation of the load is effectively decreased.

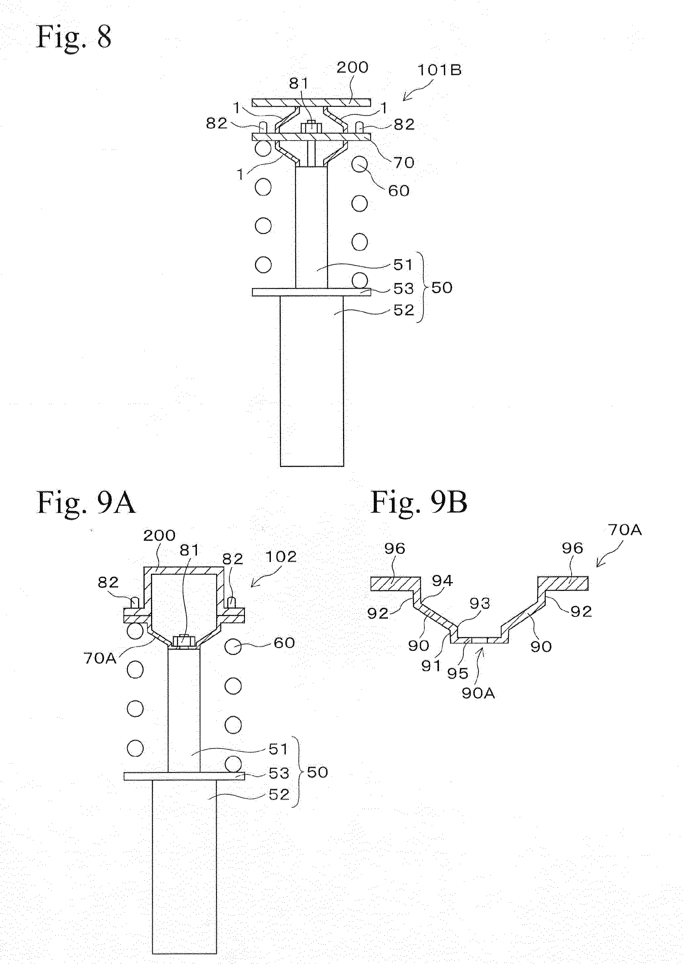

The first embodiment is described by using the suspension devices 101 and 101A, but it is not limited thereto and may have various structures. For example, the arrangement of the spring 1 in the suspension device may have another form. For example, in a suspension device 101B shown in Fig. 8, the spring 1 is arranged between the vehicle body 200 and the upper seat 70. In the suspension device 101B, the loads from the damper 50 and the suspension spring 60 are applied on the spring 1 without being separated. In the first embodiment, the arrangement forms of the spring 1 in the suspension devices 101, 101A, and 101B may be appropriately combined as necessary.

### (2) Second Embodiment

Figs. 9A and 9B show an approximate structure of a suspension device 102 relating to a second embodiment of the present invention. Fig. 9A is a sectional side view of a part of the suspension device 102, and Fig. 9B is a sectional side view of an upper seat 70A that is used in the suspension device 102. The second embodiment differs from the first embodiment in using the upper seat 70A that is a modification of the upper seat 70 in the first embodiment so as to include the structure of the spring 1. In the second embodiment, the same components as those in the first embodiment are indicated by the same reference numerals as in the case of the first embodiment, and descriptions thereof are omitted.

The upper seat 70A has a main body 90, a hole 90A, a first tubular portion 91, a second tubular portion 92, a first corner portion 93, and a second corner portion 94. The main body 90 corresponds to the main body 10 of the spring 1, the hole 90A corresponds to the hole 10A of the spring 1, the first tubular portion 91 corresponds to the first tubular portion 11 of the spring 1, and the second tubular portion 92 corresponds to the second tubular portion 12 of the spring 1. In addition, the first corner portion 93 corresponds to the first corner portion 13 of the spring 1, and the second corner portion 94 corresponds to the second corner portion 14 of the spring 1. Each portion of the upper seat 70A has a similar structure and effects as those of each corresponding portion of the spring 1, whereby the upper seat 70A exhibits similar characteristics as the spring 1 that has characteristics shown in Figs. 4A to 6.

The abutting portion of the first tubular portion 91 has a mounting portion 95 that protrudes toward the inside of the hole 90A in the radial direction. The abutting portion of the second tubular portion 92 has a mounting portion 96 that protrudes toward the outside of the hole 10A in the radial direction. The fixing member 81 has a smaller diameter portion that passes through the hole 90A. The mounting portion 95 is fixed to the upper end portion of the piston 51 of the damper 50 with the larger diameter portion of the fixing member 81. The mounting portion 96 is formed with a hole (not shown in the figures), for example. In this case, the fixing member 82 is provided to the hole of the mounting portion 96 via the vehicle body 200, whereby the mounting portion 96 is fixed to the vehicle body 200.

In the upper seat 70A, the tubular portions 91 and 92 have undeformable portions as in the case of the tubular portions 11 and 12 of the spring 1. Therefore, sliding of the mounting portions 95 and 96 with respect to the mating members is prevented. Accordingly, the mounting portions 95 and 96 are fixed to the mating members as described above. In the second embodiment, since the upper seat 70A has high stiffness, the tubular portion 92 does not have to be provided.

In the second embodiment, the upper seat 70A has a similar shape as the spring 1 of the first embodiment and is mounted to the mating members with the mounting portions 95 and 96. Therefore, while the same effects as those in the first embodiment are obtained, the number of parts is further decreased, and the suspension device is easily arranged in a small space.

### (3) Variations

As described above, the present invention is described by using the embodiments, but the present invention is not limited to the above embodiments and may be variously modified. In the following modified structures, the sane structural components as those in the above embodiments have the same reference numerals as in the case of the above embodiments, and descriptions thereof are omitted.

The main body in the present invention may have a conical shape that downwardly slopes from the outer circumferential portion to the inner circumferential portion, a S-shape, a step-like shape, or a flat shape, for example. The tubular portion may have a polygonal shape in cross section and may have a curved shape in side cross section, as long as it has a tubular shape. In addition, the main body and the tubular portion may be formed with a slit for reducing their weights. The shapes of the first corner portion and the second corner portion are not limited to the shapes shown in the figures and may be modified as various shapes such as curved surface shapes.

Moreover, the first tubular portion and the second tubular portion are formed at the inner circumferential portion and the outer circumferential portion of the main body, respectively, but only one of the first tubular portion and the second tubular portion may be formed. The abutting portion may be fixed to the mating member by welding. Alternatively, the abutting portion may be fixed to the mating member by providing a flange portion thereto and using a fixing member such as screw or the like. Otherwise, the mating member may be formed with a recess, and the abutting portion may be fixed to the mating member by engaging with the recess.

## Claims

1. A suspension device comprising:
a damper; and
an upper seat to which the damper is connected,
the damper being made so as to be connected to a vehicle body via the upper seat,
wherein the suspension device includes a spring that is made so as to be provided at at least one of a portion between the vehicle body and the upper seat and a portion between the damper and the upper seat, and
wherein the spring comprises:
a main body having a hole and having an inner circumferential portion and an outer circumferential portion;
tubular portions provided at the inner circumferential portion and the outer circumferential portion of the main body, respectively; and
corner portions formed at boundary portions between the main body and each of the tubular portions,
the main body extends in a direction crossing an axial direction of the damper,
each tubular portion has an abutting portion that is made so as to protrude from the inner circumferential portion or the outer circumferential portion of the main body toward a mating member for abutting thereon, and
each corner portion is elastically deformable so that angle of the corner portion varies with pressure that is applied from the mating member.

2. The suspension device according to claim 1, further comprising a fixing means for fixing the damper to the upper seat and comprising another spring that has the same structure as the spring between the fixing means and the upper seat.

3. The suspension device according to claim 1 or 2, wherein the spring is set so that the spring constant is smallest in an initial condition and is large when the spring works and has a change in amount of deflection.

4. A suspension device comprising:
a damper; and
an upper seat to which the damper is connected,
the damper being made so as to be connected to a vehicle body via the upper seat,
wherein the upper seat comprises:
a main body having a hole and having an inner circumferential portion and an outer circumferential portion;
a tubular portion provided at at least the inner circumferential portion of the inner circumferential portion and the outer circumferential portion of the main body; and
a corner portion formed at a boundary portion between the main body and the tubular portion,
the main body extends in a direction crossing an axial direction of the damper,
the tubular portion has an abutting portion and a mounting portion, the abutting portion is made so as to protrude from the circumferential portion of the main body toward a mating member for abutting thereon, the mounting portion is formed at the abutting portion so as to protrude toward an inside or outside of the hole in a radial direction and is made so as to be mounted to the mating member,
the corner portion is elastically deformable so that angle of the corner portion varies with pressure that is applied from the mating member.

5. The suspension device according to claim 4, wherein the upper seat is set so that the spring constant is smallest in an initial condition and is large when the upper seat works and has a change in amount of deflection.

6. The suspension device according to one of claims 1 to 5, wherein the abutting portion is made so as not to slide on the mating member when the pressure is changed.
